# EUROPEAN PATENT APPLICATION

(11) **EP 4 779 382 A1**
(43) Date of publication of application: **22.07.2026**
(21) Application number: 24864438.7
(22) Date of filing: 27.08.2024
(51) Int. Cl.: G02B 7/04, H01S 3/00, F41G 1/14

(54) **LENS POSITION ADJUSTMENT MECHANISM, LASER INNER CORE, AND LASER SIGHT**

(30) Priority: 11.09.2023 CN 202322460560 U; 26.08.2024 CN 202422065782 U
(71) Applicant: Huanic Corporation, Xi'an, Shaanxi 710077 (CN)
(72) Inventor: SUN, Jianhua, Xi'an, Shaanxi 710077 (CN); ZHANG, Zhezi, Xi'an, Shaanxi 710077 (CN)
(74) Representative: Weickmann & Weickmann PartmbB
(86) International application number: PCT/CN2024/114754
(87) International publication number: WO 2025/055716

(57) **Abstract**

A lens position adjustment mechanism, a laser inner core (30), and a laser sight. The lens position adjustment mechanism comprises a first lens mounting base (1), a first lens (2), and a pull rod (3). The front end of the pull rod (3) is fixedly connected to the rear end of the first lens mounting base (1), and the rear end of the pull rod (3) is connected to a sliding block (4); the sliding block (4) is arranged in parallel to the first lens mounting base (1) and extends forwards in the axial direction of the first lens mounting base (1); a first screw hole (5) is formed in the top surface of the front end of the sliding block (4), and a shift block (6) above the first screw hole (5) is connected to the first screw hole (5) by means of a first screw (7) running through in the thickness direction of the shift block (6). Therefore, the structure is simple, the axial space is not occupied, the operation is simple and convenient, and the focusing is rapid.

## Description

### TECHNICAL FIELD

The present disclosure relates to a lens position adjustment mechanism, a laser inner core and a laser sight.

### BACKGROUND

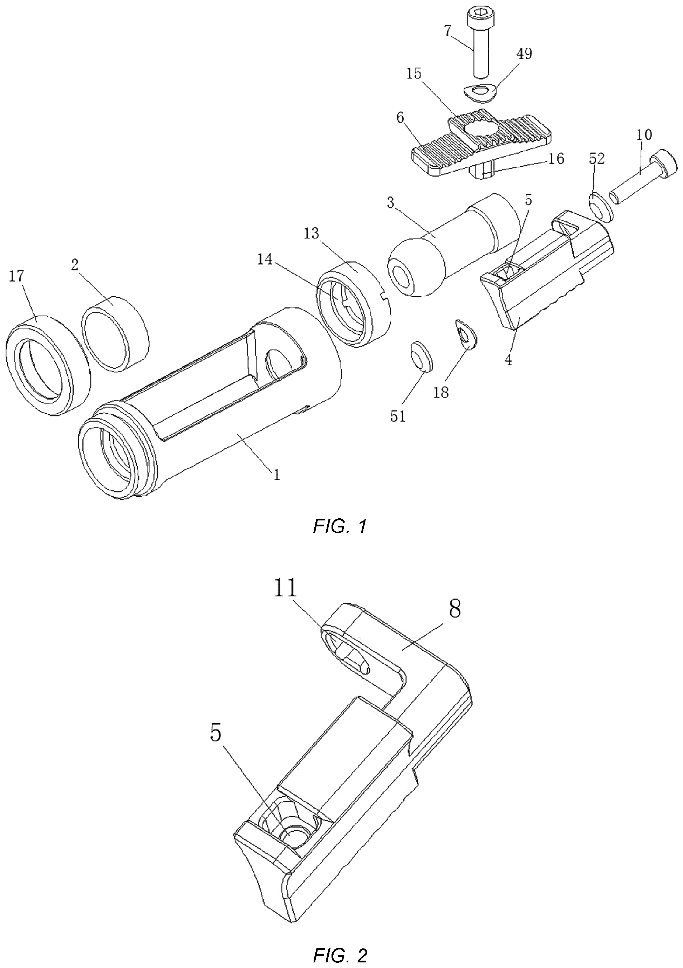

Chinese patent No. 201320495338.X discloses a three-in-one laser light source, which fixes three light sources at the same inner shell by providing an inner core (i.e. a light source fixing member, having three laser modules), inside a housing. This allows for simultaneous adjustment when using the laser light source, making it small, portable, and convenient to use. For this patent, one particularly outstanding design is a focusing device for a first laser module, and from FIG. 2 of the accompanying drawings of the specification in combination with corresponding description, it is known that the focusing device has a complex structure, a large length and occupies a large axial space; and moreover, since the focusing is realized by means of circumferential thread rotation through a focusing hand wheel to change the position of a laser tube, the circumferential rotation is converted into a linear back-and-forth motion of a laser tube holder during the focusing process, in which a motion loss is clearly present, and particularly, the focusing speed is relatively low.

### SUMMARY

The present disclosure aims to overcome the defects of complication of focusing structure and low focusing speed of existing laser sights.

In order to achieve the above object, the present disclosure provides a lens position adjustment mechanism including a first lens mounting base, and a first lens mounted at the front end of the first lens mounting base; it further includes a pull rod, the front end of the pull rod is fixedly connected with the rear end of the lens mounting base, and the rear end of the pull rod is connected with a sliding block; the sliding block is arranged in parallel with the first lens mounting base and extends forwards in an axial direction of the first lens mounting base;

a first screw hole is provided in a top surface of the front end of the sliding block, and a shift block positioned above the first screw hole is connected to the first screw hole by a first screw penetrating through a thickness direction of the shift block.

As a further improvement, the rear end of the sliding block extends towards one side of the pull rod to form a bending part, and a second screw hole is provided in the rear end portion of the pull rod is provided with;

the second screw passes through the stepped hole in the bending part from the rear of the bending part to the front to be connected with the second screw hole.

As a further improvement, a rear end face of the pull rod is a first concave spherical surface;

the stepped hole has a stepped surface disposed in a front end face of the bending part, a rear end face of the bending part is a second concave spherical surface, and the rear end face is superposed with a rear end face of the stepped hole;

an elastic washer and a first spherical gasket are sequentially disposed within the stepped surface of the stepped hole from inside to outside, and a spherical surface of the first spherical gasket is mated with a first concave spherical surface; a second spherical gasket is disposed in the second concave spherical surface, and the second spherical gasket is mated with a spherical surface of the first spherical gasket; the spherical surfaces of the first spherical gasket and the second spherical gasket are both convex spherical surfaces.

As a further improvement, an outer surface of the front end of the pull rod is a spherical surface and is positioned in a spherical cavity at the rear end of the first lens mounting base; a retaining ring is sleeved on the spherical surface, and the retaining ring is in threaded connection with a threaded surface on the rear side of the spherical cavity; the front side of the inner surface of the retaining ring is a curved surface with a radius larger than a spherical diameter of the spherical surface, and the rear side of the inner surface of the retaining ring is an inner convex ring with a radius smaller than a spherical diameter of the spherical surface.

As a further improvement, the bottom surface of the sliding block is a corrugated surface.

As a further improvement, the bottom surface of the shift block is provided with a hollow shift lever, the lower end of the hollow shift lever may be inserted into the first screw hole, and the threaded shank of the first screw is positioned in the hollow shift lever and extends downwards to be connected with the first screw hole.

A laser inner core including an inner core housing, one side of the inner core housing is provided with a lens mounting cavity extending in a length direction, in the front end of the lens mounting cavity a photodiode disposed at the top end of a fixing base and a second lens fixed in a second lens mounting base are mounted sequentially from inside to outside; the laser inner core further includes a lens position adjustment mechanism as mentioned above;
the first lens mounting base is mounted in the lens mounting cavity, and the first lens mounting base is positioned at the rear side of the fixing base;
the rear end of the first lens mounting base is located at the rear end of the lens mounting cavity;
the sliding block is disposed at the outer side of the inner core housing in parallel;
a slideway which is penetrating radially through is formed in the sidewall of the first lens mounting base, and the slideway is provided between the front end and the rear end of the first lens mounting base;
a laser tube holder is disposed at the rear end of the slideway, and a laser tube LD is mounted at the front end of the laser tube holder;
two opposite third screws are each fixedly connected with the screw holes in the laser tube holder after passing through the stepped hole in the inner core housing from the outside.

A laser sight including a sighting device shell, a laser inner core as mentioned above is disposed inside the sighting device shell;
a slot through-hole is provided in a top surface of the sighting device shell, the shift block is positioned at the outer side of the slot through-hole, and the first screw is connected with a first screw hole positioned at the inner side of the slot through-hole after passing through the shift block;
the length of the shift block is larger than that of the slot through-hole, so that when the shift block drives the sliding block to move in a length direction of the slot through-hole, the shift block is always located outside the slot through-hole.

As a further improvement, the shift block is provided with a hollow shift lever at the bottom surface, the lower end of the hollow shift lever is inserted into the first screw hole, and the threaded shank of the first screw is positioned in the hollow shift lever and extends downwards to be connected with the first screw hole.

As a further improvement, the rear end of the sliding block extends towards one side of the pull rod to form a bending part; a second screw hole is provide at the rear end of the pull rod; and a second screw passes through a through-hole in the bending part to be connected with the second screw hole.

The present disclosure has the following advantages: simple structure, no occupation of axial space, convenient operation and fast focusing.

### BRIEF DESCRIPTION OF THE DRAWINGS

FIG. 1 is a schematic view showing the components of a lens position adjustment mechanism.
FIG. 2 is a first structural schematic view of a sliding block.
FIG. 3 is a structural schematic view of a pull rod.
FIG. 4 is a second schematic structural view of the sliding block.
FIG. 5 is a structural schematic view of a rear end face of a bending part of the sliding block.
FIG. 6 is a structural schematic view of a laser inner core.
FIG. 7 is an exploded view of the laser inner core of FIG. 6.
FIG. 8 is a schematic view of a front end face of the laser inner core.
FIG. 9 is an A-A view of FIG. 8.
FIG. 10 is a schematic view of a laser sight.
FIG. 11 is a schematic view of arrangement of a slot through-hole.
FIG. 12 is a schematic view of a front end face of the laser sight.
FIG. 13 is a B-B view of FIG. 12.
FIG. 14 is a horizontal axial sectional view of the laser sight.
FIG. 15 is an exploded view of the laser sight.
FIG. 16 is a structural schematic view showing an arrangement of a potentiometric displacement sensor.
FIG. 17 is an exploded view of the structure shown in FIG. 16.
FIG. 18 is a cross-sectional view of the laser sight showing the arrangement of the potentiometric displacement sensor.
FIG. 19 is an exploded view of the laser sight showing the arrangement of the potentiometric displacement sensor.

### LIST OF REFERENCE NUMERALS:

1, First lens mounting base; 2, First lens; 3, Pull rod; 4, Sliding block; 5, First screw hole; 6, shift block; 7, First screw; 8, Bending part; 9, Second screw hole; 10, Second screw; 11, Through-hole; 12, First concave spherical surface; 13, Retaining ring; 14, Inner convex ring; 15, Protrusion; 16, Hollow shift lever; 17, Lens retainer; 18, Elastic washer; 19, Inner core housing; 20, Lens mounting cavity; 21, Fixing base; 22, Photodiode; 23, Second lens mounting base; 24, Second lens; 25, Slideway; 26, Laser tube holder; 27, Laser tube LD; 28, Third screw; 29, Sighting device shell; 30, Laser inner core; 31, Slot through-hole; 32, Second lens retaining ring; 33, Bottom surface; 34, Steel ball; 35, Spring; 36, Screw; 37, Shift block sealing gasket; 38, Battery compartment; 39, Battery; 40, Driver board; 41, Main control board; 42, Rear cover component; 43, Push-button switch; 44, Toggle switch; 45, Indicator light; 46, Battery cover compartment; 47, Lens compartment; 48, Laser inner core retaining ring; 49, Elastic washer; 50, Second concave spherical surface; 51, First spherical gasket; 52, Second spherical gasket; 53, Potentiometric displacement sensor; 54, Brush pusher; 55, Limit notch; 56, Sliding potentiometer mounting base.

### DETAILED DESCRIPTION

In order to overcome the defects of complication of focusing structure and low focusing speed of the existing laser sights, the present embodiment provides a lens position adjustment mechanism shown in FIG. 1, which includes a first lens mounting base 1, a first lens 2 mounted at the front end of the first lens mounting base 1, and particularly includes a pull rod 3, the front end of the pull rod 3 is fixedly connected with the rear end of the lens mounting base 1, and the rear end of the pull rod 3 is connected with a sliding block 4; the sliding block 4 is arranged in parallel with the first lens mounting base 1 and extends forward in an axial direction of the first lens mounting base 1.

In order to achieve a connection between the sliding block 4 and the pull rod 3, in the embodiment a first screw hole 5 is particularly provided in a top surface of the front end of the sliding block 4 (the viewer's left hand side is defined as the front), and the shift block 6 arranged above the first screw hole 5 is connected with the first screw hole 5 by a first screw 7 penetrating through a thickness direction of the shift block 6. That is, the first screw 7, after passing through the hole in the shift block 6 from the top surface of the shift block 6 downwards, is screwed with the first screw hole 5.

By sliding the shift block 6 and then driving the sliding block 4 by virtue of the connection of the first screw 7 and the first screw hole 5, the sliding block 4 then drives the pull rod 3 which is fixedly connected to the same, and finally the first lens mounting base 1, which is fixedly connected to the pull rod 3, is driven to move by means of the pull rod 3. Thereby, the distance between the front and back of the first lens 2 is changed, and that the change of the focal length is thereby effected. In contrast to the focusing configuration of the prior art, such a focusing method can eliminate the need for occupying the axial space of a sighting device, due to the arrangement of the sliding block 4 parallel to the pull rod 3; and moreover, since the shift block 6 is disposed above the first lens mounting base 1, it is located on the top surface of the sighting device shell when the shift block is mounted in a sighting device, and that in operation the adjustment of the focal length can be implemented by moving the shift block 6 forwards and backwards in the axial direction so that the operation is very convenient, and the feeling of operation for distance adjustment is more accurate.

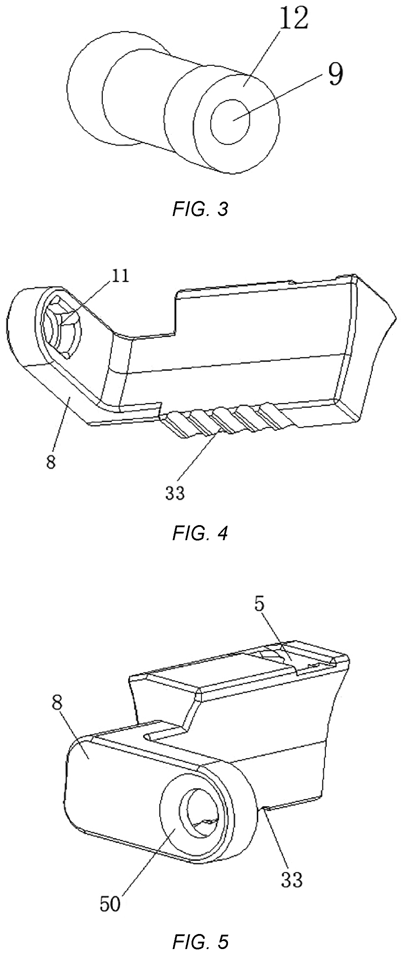

The present embodiment provides the sliding block 4 as shown in FIG. 2, in order to facilitate a simple and reliable connection with the pull rod 3, the rear end of the sliding block extends towards one side of the pull rod 3 and forms a bending part 8; and a second screw hole 9 is provided at the rear end of the pull rod 3, as shown in FIG. 3; a second screw 10 passes through a through-hole 11 in the bending part 8 and is connected with the second screw hole 9. Wherein, in practice, the angle between the bending part 8 and the main body of the sliding block 4 is preferably nearly 90°, this can well ensure that the sliding block 4 is arranged parallel to the pull rod 3, and is then disposed parallel to the first lens base 1, so that all the components will have a better coaxiality when they are mounted in a chamber of a sighting device shell, which is conducive to guarantee the accuracy of the sighting device.

Moreover, in order to facilitate positioning and assembling, a rear end face of the pull rod 3 provided by the embodiment is a first concave spherical surface12; a stepped surface of the stepped hole 1 of the sliding block 4 is disposed in a front end face of the bending part 8 shown in FIG. 4, a rear end face of the bending part 8 is a second concave spherical surface 50 as shown in FIG. 5, and the rear end face is superposed with a rear end face of the stepped hole 11; an elastic washer 18 and a first spherical gasket 51 as shown in FIG. 1 are sequentially disposed within the stepped surface of the stepped hole 11 from inside to outside, and a spherical surface of the first spherical gasket 51 is mated with the first concave spherical surface 12 as shown in FIG. 3; a second spherical gasket 52 is disposed in the second concave spherical surface 50 as shown in FIG. 1, and the second spherical gasket 52 is mated with a spherical surface of the first spherical gasket 51; the spherical surfaces of the first spherical gasket 51 and the second spherical gasket 52 are both convex spherical surfaces.

As can be seen from FIG. 1, in the embodiment, the outer surface of the front end of the pull rod 3 is a spherical surface and is positioned in a spherical cavity at the rear end of the first lens mounting base 1; a retaining ring 13 is sleeved on the spherical surface, and the retaining ring 13 is in threaded connection with a threaded surface on the rear side of the spherical cavity; the front side of the inner surface of the retaining ring 13 is a curved surface with a radius larger than a spherical diameter of the spherical surface, and the rear side of the inner surface of the retaining ring 13 is an inner convex ring 14 with a radius smaller than a spherical diameter of the spherical surface. The connection of the pull rod 3 to the first transparent mounting base 1 is achieved by means of a threaded connection of the retaining ring 13 (which is actually a threaded retaining ring provided with a thread on the outer wall) with a spherical cavity at the rear end of the first lens mounting base 1, and by means of the arrangement of the inner convex ring 14. At the same time, the spherical contact surface contacting the two part enhances a flexible contact and flexibility of the contact surface, avoiding operation obstructions due to jamming and sticking in use.

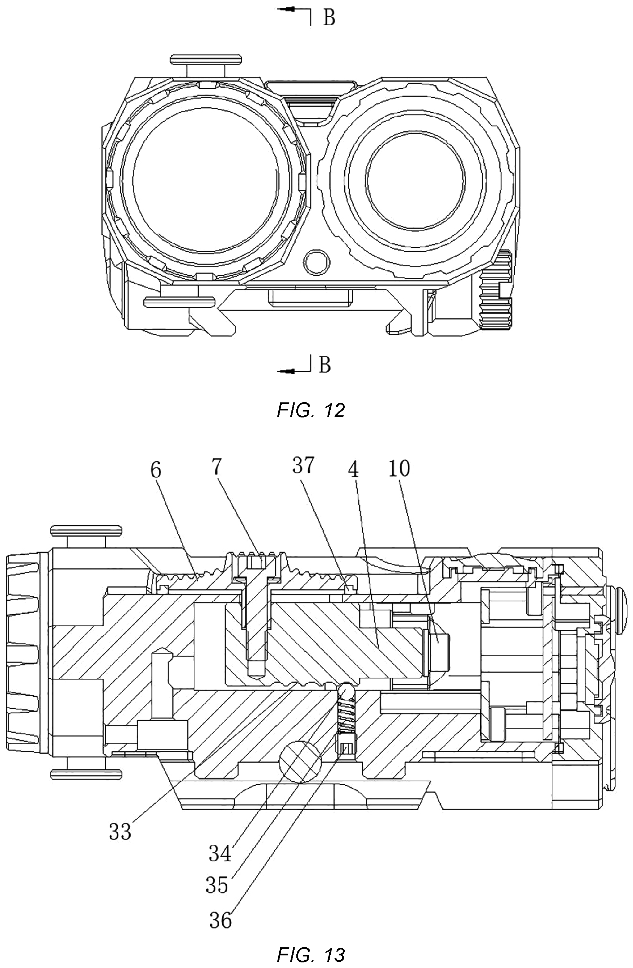

As shown in FIG. 4, a bottom surface 33 of the sliding block 4 is a corrugated surface, with the purpose that, after the sliding block 4 is mounted in the sighting device, through cooperation with a spring-loaded ejection component consisting of a steel ball 34, a spring 35 and a screw 36 mounted in the shell of the sighting device as shown in FIG. 12, in which the steel ball 34 is pressed on the bottom surface 33 and thus a clicking sound is generated by friction when the sliding block 4 moves, so that the adjustment distance of the focal length can be roughly known by the operator, and that the comfort and the convenience of use are improved. Meanwhile, such configuration ensures reliable positioning, the inertia caused by impact and vibration during firearm shooting will not result in displacement of the focusing mechanism, and that the change in the angle of the output light spot is thereby avoided.

In order to make the interaction between the shift block 6 and the sliding block 4 more stable, in the embodiment a hollow shift lever 16 is disposed on the bottom surface of the shift block 6, the lower end of the hollow shift lever 16 may be inserted into the first screw hole 5, and a threaded shank of the first screw 7 is positioned in the hollow shift lever 16 and extends downwards to be connected with the first screw hole 5. In this way, an overlapping area of the intersection of the shift block 6 and the sliding block 4 is enhanced by means of the insertion of the hollow shift lever 16 into the first screw hole 5, and the connection stability of the hollow shift lever 16 and the first screw hole 5 is ensured by pressing former into the latter when they are mounted into the shell of the sighting device.

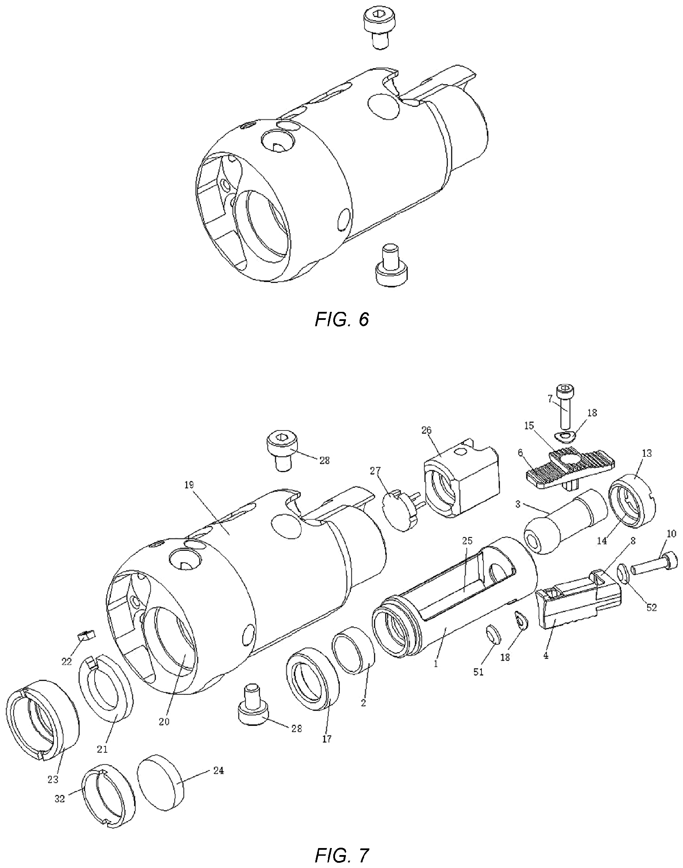

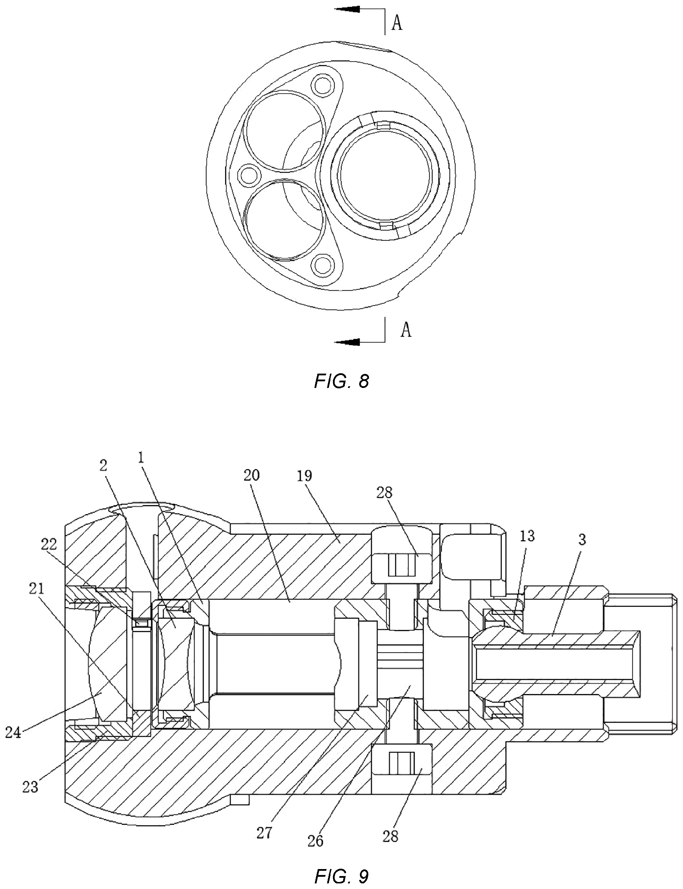

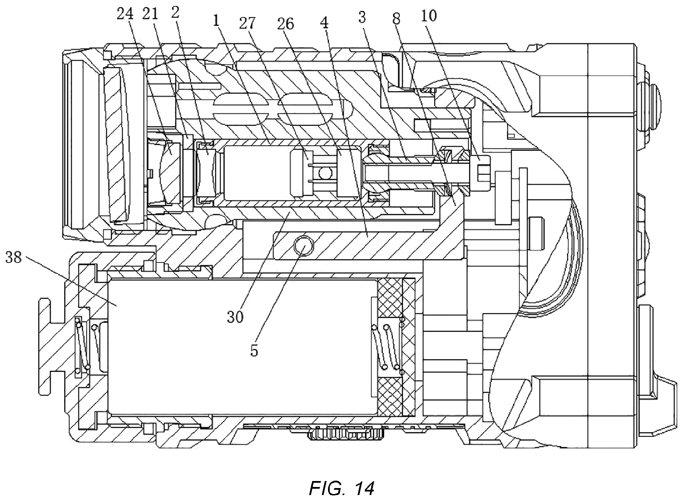

Based on the aforementioned lens position adjustment mechanism, the embodiment provides a laser inner core (corresponding to a three-in-one light source fixing member integrated with three laser modules in the prior art, as shown in FIGs. 6, 7, 8 and 9. With regard to the prior art, reference can be made to the light source fixing member in the Chinese invention patent No. 201320495338.X, or to the three-in-one laser module in the Chinese invention patent No. 201820873768.3). As shown in FIG. 7 or FIG. 9, the laser inner core includes an inner core housing 19, one side of the inner core housing 19 is provided with a lens mounting cavity 20 (similar to the mounting cavity of the first laser module in the Chinese invention patent No. 201320495338. X). At the front end of the lens mounting cavity 20, a photodiode 22 disposed at the top end of the fixing base 21 and a second lens 24 fixed on the second lens mounting base 23 are mounted sequentially from inside to outside (see FIG. 9 for the relationship of sequence); the special characteristic of the laser inner core is that its focusing mechanism is the lens position adjustment mechanism as illustrated in the previous embodiment (i.e. Fig. 1); that is, the lens position adjustment mechanism is mounted in the lens mounting cavity 20 and is disposed at the rear side of the fixing base 21 (the viewer's right hand side is defined as the rear). Specifically, the first lens mounting base 1 of the lens position adjustment mechanism is mounted in the lens mounting cavity 20, and the first lens mounting base 1 is disposed at the rear side of the fixing base 21; meanwhile, the rear end of the first lens mounting base 1 is located at the rear end of the lens mounting cavity 20 to facilitate the connection of the pull rod 3, while also ensuring that an adjustment range of the focusing distance has a large axial space. And, the sliding block 4 of the lens position adjustment mechanism is arranged in parallel at the outer side of the inner core housing 19 (see FIG. 14).

In the embodiment, a laser tube LD27 is further added, and as shown in FIG. 7 in detail, the sidewall of the first lens mounting base 1 is provided with a slideway 25 which radially penetrates the same, and the slideway 25 is disposed between the front end and the rear end of the first lens mounting base 1; the rear end of the slideway 25 is provided with a laser tube holder 26, and the laser tube LD 27 is mounted at the front end of the laser tube holder 26 such that the outgoing light of the laser tube LD is emitted forward to the first lens 2. In order to ensure a position fixation of the laser tube LD, in the embodiment two opposite third screws 28, after passing through a stepped hole of the inner core housing 19 from outside, are fixedly connected with the screw holes in the laser tube holder 26 respectively, i.e. the top surface and the bottom surface of the laser tube holder 26 are located at the upper opening and the lower opening of the slideway 25, respectively, while in practical applications, the top surface and the bottom surface of the laser tube holder 26 may extend to the outer side of the upper opening and the lower opening of the slideway 25, respectively.

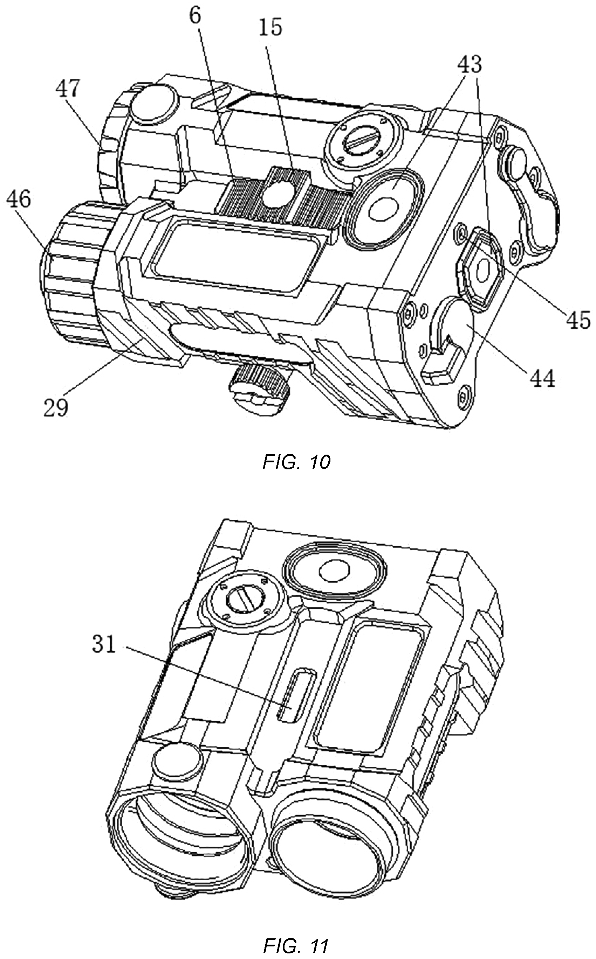

In the embodiment, the first lens 2 is a beam expanding lens, the second lens 24 is a convex lens, while it should be noted that the photodiode 22 is used for feeding back the energy received from the laser tube LD27 to the main control board 41 (see FIG. 10) when the first lens 2 is adjusted back and forth, so as to make the energy per unit area of the beam irradiation through the second lens 24 uniform.

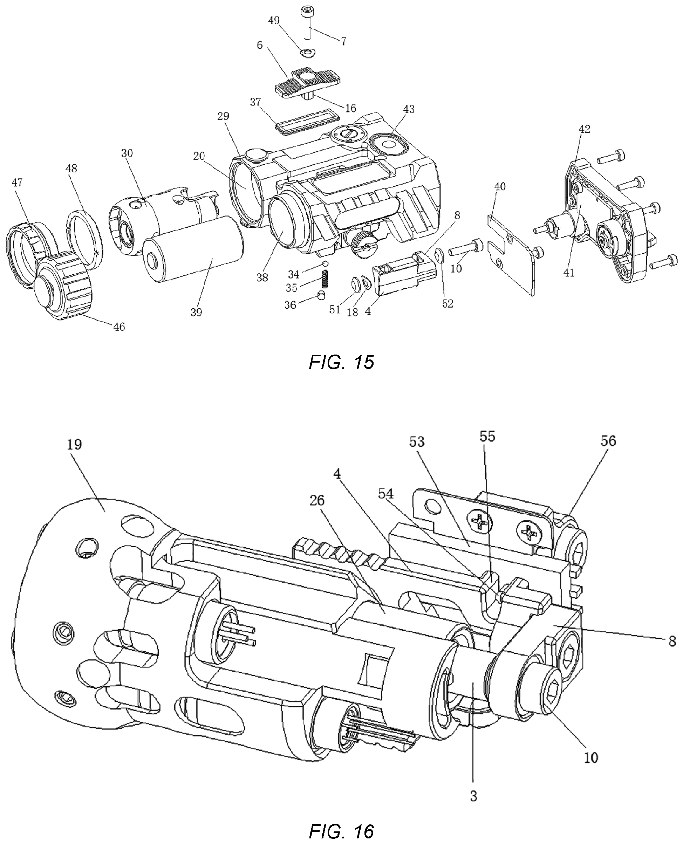

Based on the aforementioned laser inner core, the present embodiment provides a laser sight shown in FIGs. 10, 11, 12, 13, 14, and 15, which includes a sighting device shell 29, where a laser inner core 30 provided in the foregoing embodiment is disposed at one side in the sighting device shell 29, and a battery compartment 38 is disposed in the sighting device shell 29 at the other side; the top surface of the sighting device shell 29 is provided with a slot through-hole 31 as shown in FIG. 12, the shift block 6 is disposed at the outer side of the slot through-hole 31 as shown in FIG. 15, i.e. an outer side of the top surface of the sighting device shell 29. And, the first screw 7, after passing through the shift block 6, is connected with a first screw hole 5 positioned at the inner side of the slot through-hole 31 as shown in FIG. 13, so that the connection between the shift block 6 and the sliding block 4 is established (the sliding block 4 is positioned at the inner side of the sighting device shell 29 and is located between the laser inner core 30 and the battery compartment 38); the length of the shift block 6 is greater than that of the slot through-hole 31, so that when the shift block 6 drives the sliding block 4 to move in a length direction of the slot through-hole 31, the shift block 6 is always located outside the slot through-hole 31.

And, the lower end of a hollow shift lever 16, at the bottom surface of the shift block 6, is inserted into the first screw hole 5, while the threaded shank of the first screw 7 is disposed in the hollow shift lever 16 and extends downwards to be connected with the first screw hole 5, so that the reliability of connection between the shift block 6 and the sliding block 4 is enhanced.

The rear end of the sliding block 4 extends towards the side of the pull rod 3 to form a bending part 8, which is connected with a second screw hole 9 provided at the rear end of the pull rod 3 via a second screw 10; and, as can be seen from FIG. 13, the bending part 8 bends and extends in a direction toward the laser inner core and bents.

As shown in FIG. 10, the laser sight provided in the embodiment further includes a push-button switch 43, a toggle switch 44, an indicator lamp 45, a battery cover assembly 46. a lens compartment 47, and, as shown in FIG. 14, a driver board 40, a main control board 41, a rear cover component 42, and a laser inner core press ring 48, which are conventional technologies and thus will not further described herein.

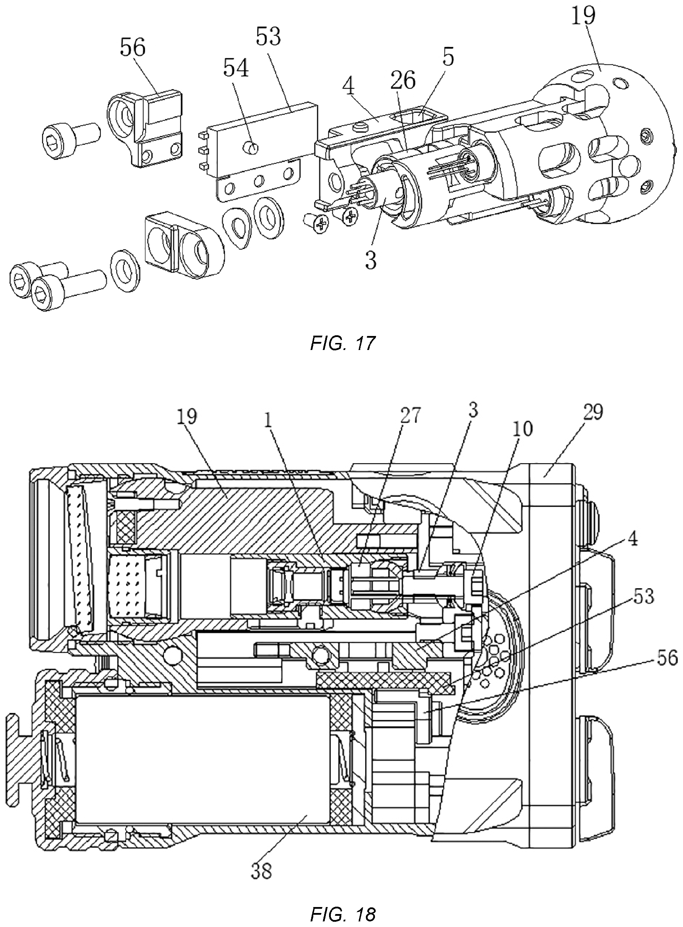

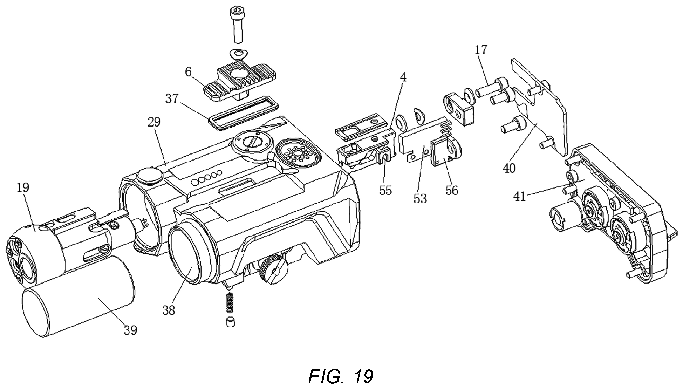

As can be seen from FIGs. 16, 17 and 18, in order to meet the focusing requirement while ensuring the stability of the output illumination, in the embodiment a potentiometric displacement sensor 53 is disposed in the sighting device shell 29, and the potentiometric displacement sensor 53 is electrically connected with the main control board 41 as shown in FIG. 19, a brush pusher 54 of the potentiometric displacement sensor 53 is inserted into a limit notch 55provided at the rear end of the bottom of the sliding block 4 as shown in FIG. 16 to move along with a back-and-forth movement of the sliding block 4, so as to transmit a displacement signal of the sliding block 4 to the main control board 41. The main control board 41 adjusts the operating current of the laser tube LD27 in accordance with the displacement signal, so that the laser tube LD27 has a stable outgoing light illuminance, i.e., which does not change with the position of the laser tube, thereby achieving the stability of the laser illuminance output by the optical system of the laser module.

## Claims

1. A lens position adjustment mechanism comprising a first lens mounting base (1), and a first lens (2) mounted at the front end of the first lens mounting base (1), **characterized in that** it further comprises a pull rod (3), the front end of the pull rod (3) is fixedly connected with the rear end of the lens mounting base (1), and the rear end of the pull rod (3) is connected with a sliding block (4), the sliding block (4) is arranged in parallel with the first lens mounting base (1) and extends forwards in an axial direction of the first lens mounting base (1);
a first screw hole (5) is provided in a top surface of the front end of the sliding block (4), and a shift block (6) positioned above the first screw hole (5) is connected to the first screw hole (5) by a first screw (7) penetrating through a thickness direction of the shift block (6).

2. The lens position adjustment mechanism according to claim 1, **characterized in that** the rear end of the sliding block (4) extends towards one side of the pull rod (3) to form a bending part (8), and a second screw hole (9) is provided in the rear end portion of the pull rod (3);
the second screw (10) passes through a stepped hole (11) in the bending part (8) from the rear of the bending part (8) to the front to be connected with the second screw hole (9).

3. The lens position adjustment mechanism according to claim 2, **characterized in that** a rear end face of the pull rod (3) is a first concave spherical surface (12);
the stepped hole (11) has a stepped surface disposed in a front end face of the bending part (8), a rear end face of the bending part (8) is a second concave spherical surface (50) and the rear end face is superposed with a rear end face of the stepped hole (11);
an elastic washer (18) and a first spherical gasket (51) are sequentially disposed within the stepped surface of the stepped hole (11) from inside to outside, and a spherical surface of the first spherical gasket (51) is mated with the first concave spherical surface (12); a second spherical gasket (52) is disposed in the second concave spherical surface (50), and the second spherical gasket (52) is mated with a spherical surface of the first spherical gasket (51); the spherical surfaces of the first spherical gasket (51) and the second spherical gasket (52) are both convex spherical surfaces.

4. The lens position adjustment mechanism according to claim 1, **characterized in that** the outer surface of the front end of the pull rod (3) is a spherical surface and is positioned in a spherical cavity at the rear end of the first lens mounting base (1); a retaining ring (13) is sleeved on the spherical surface, and the retaining ring (13) is in threaded connection with a threaded surface on the rear side of the spherical cavity; the front side of the inner surface of the retaining ring (13) is a curved surface with a radius larger than a spherical diameter of the spherical surface, and the rear side of the inner surface of the retaining ring (13) is an inner convex ring (14) with a radius smaller than a spherical diameter of the spherical surface.

5. The lens position adjustment mechanism according to claim 1, **characterized in that** a bottom surface of the sliding block (4) is a corrugated surface.

6. The lens position adjustment mechanism according to claim 1, **characterized in that** the bottom surface of the shift block (6) is provided with a hollow shift lever (16), the lower end of the hollow shift lever (16) can be inserted into the first screw hole (5), and the threaded shank of the first screw (7) is positioned in the hollow shift lever (16) and extends downwards to be connected with the first screw hole (5).

7. A laser inner core comprising an inner core housing (19), one side of the inner core housing (19) is provided with a lens mounting cavity (20) extending in a length direction, in the front end of the lens mounting cavity (20) a photodiode (22) disposed at the top end of a fixing base (21) and a second lens (24) fixed in a second lens mounting base (23) are mounted sequentially from inside to outside, **characterized in that** it further comprises a lens position adjustment mechanism in accordance with claim 1;
the first lens mounting base (1) is mounted in the lens mounting cavity (20), and the first lens mounting base (1) is positioned at the rear side of the fixing base (21);
the rear end of the first lens mounting base (1) is located at the rear end of the lens mounting cavity (20);
the sliding block (4) is disposed at the outer side of the inner core housing (19) in parallel;
a slideway (25) which is penetrating radially through is formed in the sidewall of the first lens mounting base (1), and the slideway (25) is provided between the front end and the rear end of the first lens mounting base (1);
a laser tube holder (26) is disposed at the rear end of the slideway (25), and a laser tube LD (27) is mounted at the front end of the laser tube holder (26);
two opposite third screws (28) are each fixedly connected with the screw holes in the laser tube holder (26) after passing through the stepped hole in the inner core housing (19) from the outside.

8. A laser sight comprising a sighting device shell (29), **characterized in that** a laser inner core (30) in accordance with claim 7 is disposed inside the sighting device shell (29);
a slot through-hole (31) is provided in a top surface of the sighting device shell (29), the shift block (6) is positioned at the outer side of the slot through-hole (31), and the first screw (7) is connected with a first screw hole (5) positioned at the inner side of the slot through-hole (31) after passing through the shift block (6);
the length of the shift block (6) is larger than that of the slot through-hole (31), so that when the shift block (6) drives the sliding block (4) to move in a length direction of the slot through-hole (31), the shift block (6) is always located outside the slot through-hole (31).

9. The laser sight according to claim 8, **characterized in that** the shift block (6) is provided with a hollow shift lever (16) at the bottom surface, the lower end of the hollow shift lever (16) is inserted into the first screw hole (5), and the threaded shank of the first screw (7) is positioned in the hollow shift lever (16) and extends downwards to be connected with the first screw hole (5).

10. The laser sight according to claim 9, **characterized in that** the rear end of the sliding block (4) extends towards one side of the pull rod (3) to form a bending part (8); a second screw hole (9) is provide at the rear end of the pull rod (3); and a second screw (10) passes through a through-hole (11) in the bending part (8) to be connected with the second screw hole (9).

11. The laser sight according to claim 8, 9 or 10, **characterized in that** it further comprises a potentiometric displacement sensor (53) disposed in the sighting device shell (29), and the potentiometric displacement sensor (53) is electrically connected with the main control board (41);
a brush pusher (54) of the potentiometric displacement sensor (53) is inserted into a limit notch (55) provided in the rear end of the bottom surface of the sliding block (4) and moves along with the sliding block (4) when the same is moved back and forth, so as to transmit a displacement signal of the sliding block (4) to the main control board (41), and the main control board (41) adjusts the operating current of the laser tube LD (27) in accordance with the displacement signal such that the outgoing light illuminance of the laser tube LD (27) is stable, thereby achieving the stability of the laser illuminance output by an optical system of a laser module.
